# EUROPEAN PATENT APPLICATION

(11) **EP 1 770 814 A2**
(43) Date of publication of application: **04.04.2007**
(21) Application number: 06121404.5
(22) Date of filing: 28.09.2006
(51) Int. Cl.: H01M 8/04, H01M 8/10

(54) **Control device for fuel cell system and related method**

(30) Priority: 28.09.2005 KR 20050090737
(71) Applicant: Samsung SDI Co., Ltd., Suwon-si Gyeonggi-do (KR)
(72) Inventor: KURIIWA, Takahiro, Gyeonggi-do (KR)
(74) Representative: Hengelhaupt, Jürgen

(57) **Abstract**

A fuel cell system and a control device and a control method thereof capable of simply and accurately controlling concentration of fuel without using a fuel concentration sensor detecting concentration of fuel, includes a fuel cell system including: a fuel cell generating electric energy by electrochemically reacting a fuel mixture of fuel and water with oxidizer; a fuel supplier supplying the fuel to the fuel cell; and a control device first increasing the supply amount of the fuel by a predetermined amount when a first point of a first current and a first voltage output from the fuel cell is positioned below a reference current-voltage curve and then increasing and decreasing any one of the supply amount of the fuel and the supply amount of the water in response to a moving direction of a second point of a second current and a second voltage output from the fuel cell.

## Description

### BACKGROUND OF THE INVENTION

### 1. Field of the Invention

Aspects of the present invention relate to a fuel cell system, a control device of a fuel cell system and a control method of a fuel cell system wherein the control device can stably and continuously operate the system by conveniently and accurately controlling concentration of fuel without using a methanol concentration sensor

### 2. Description of the Related Art

A fuel cell is a power generation system used to generate electric energy by electro-chemically reacting hydrogen and oxygen. According to the types of electrolyte used, fuel cells can be typed as a phosphoric acid fuel cell, a molten carbonate fuel cell, a solid oxide fuel cell, a polymer electrolyte membrane fuel cell, and an alkaline fuel cell, etc. These respective fuel cell types are basically operated on the same principle, but are different in the type of used fuels, catalyzers, and electrolytes, etc., as well as operating temperatures.

Among the various types of the fuel cells, the polymer electrolyte membrane fuel cell (PEMFC) has several advantages over other fuel cells, including a remarkably high output, a low operating temperature, and rapid starting and response . The PEMFC is widely applicable to a mobile power source, such as a portable electronic equipment or a transportable power source, such as a power source for automobiles, as well as a distributed power source, such as a stationary power plant used in a house and a public building, etc. As a type of polymer electrolyte membrane fuel cell, there is a direct liquid fuel type fuel cell, such as a direct methanol fuel cell, which can directly supply a liquid methanol fuel to the fuel cell. The fuel cell may include stacks that are a fuel cell structure manufactured by stacking a plurality of unit fuel cells for generating electricity. The direct fuel type fuel cell is more advantageous in view of miniaturization because it does not use a reformer, unlike the polymer electrolyte membrane fuel cell.

The fuel cell system such as the direct methanol fuel cell, etc., has disadvantages in that a starting time is long, the volume of a system is larger than a secondary battery, etc., and energy density per weight is small. Accordingly, the conventional fuel cell system has an additional energy storage device such as a battery or a supercapacitor in order to overcome the disadvantages described above. Such a system is referred to as hybrid power supplier.

Meanwhile, the direct methanol fuel cell manifests a difference of efficiency in response to a change of concentration in the fuel supplied to the fuel cell. One of the reasons for such a phenomenon is due to the fact that an electrolytic film of a currently used direct methanol fuel cell does not selectively transfer only the hydrogen ion, and instead also allows crossover or permeation of fuel through the membrane.

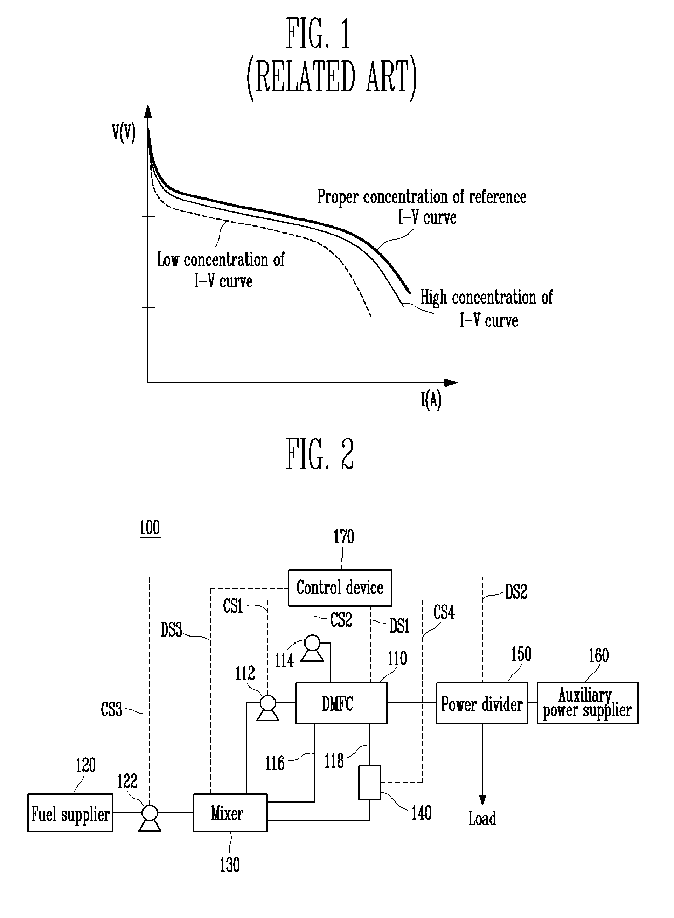

For example, as shown in FIG. 1, if a fuel having high concentration above a predetermined concentration is supplied to the anode side of the stack in the direct methanol fuel cell (where the high concentration of fuel indicates that mole concentration of fuel contained in a fuel mixture is higher than that of fuel capable of generating optimally efficient power), the amount of fuel, which is crossed-over or permeated from the anode side to a cathode side through the electrolytic film, is increased. Accordingly, the fuel transmitted to the electrolytic film is oxidized in the cathode side and make it possible to reduce the potential generated from the stack. In contrast, if a fuel having a low concentration below a predetermined concentration is supplied to the anode side of the stack in the direct methanol fuel cell (where the low concentration of fuel indicates that mole concentration of fuel contained in a fuel mixture is lower than that of fuel capable of generating optimally efficient power), a fuel shortage phenomenon occurs in the anode and make it possible to reduce the potential generated from the stack.

Therefore, in the conventional direct methanol fuel cell, it is important to uniformly maintain concentration of the fuel for stably operating the fuel cell system for a long time.

Also, the conventional fuel cell system described above is provided with a recycler for recycling by-products generated from an electrochemical reaction in the fuel cell to reuse them. Accordingly, an overall efficiency of the system improves. The by-products include non-reactive or non-reacted fuel or water, etc. For example, the conventional direct methanol fuel cell uses a mixing tank and a methanol concentration sensor for recycling the non-reactive or non-reacted fuel and water discharged from the fuel cell to reuse them. The methanol concentration sensor is typically installed on a path supplying a fuel mixture or on a path circulating fuel or water in order to properly control concentration of methanol in the fuel supplied to the stack.

The methanol concentration sensor described above may be a common concentration sensor such as a quartz vibrator. However, the methanol concentration sensor generates variations in detected values depending on its own margin of error as well as its ambient temperature. Therefore, the conventional fuel cell system using the methanol concentration sensor must consider the detected concentration value as well as variables such as correction value, temperature, etc., in order to properly control the concentration of fuel supplied to the stack. Accordingly, a control device is complicated and degree of freedom in designing a control device for controlling the fuel cell is restricted. Further, when the methanol concentration sensor fails, the conventional direct methanol fuel cell cannot be stably and continuously operated since it is almost impossible to supply a proper concentration of fuel to the stack.

### SUMMARY OF THE INVENTION

Aspects of the present invention include a control method of a fuel cell system, a control device of a fuel cell system using the same and a fuel cell system which can stably and continuously operate the system by controlling concentration of fuel supplied to a direct methanol fuel cell without using a methanol concentration sensor.

Aspects of the present invention include a control method of a fuel cell system, a control device of a fuel cell system using the same and a fuel cell system which can easily control concentration of methanol in a direct methanol fuel cell using a methanol concentration sensor even when the methanol concentration sensor fails.

According to aspects of the present invention, a fuel cell system includes: a fuel cell generating electric energy by electrochemically reacting a fuel mixture of fuel and water with oxidizer; a fuel supplier supplying the fuel to the fuel cell; and a control device first increasing the supply amount of the fuel by a predetermined amount when a first point of a first current and a first voltage output from the fuel cell is positioned below a reference current-voltage curve and then increasing and/or decreasing any one of the supply amount of the fuel and the supply amount of the water in response to a moving direction of a second point of a second current and a second voltage output from the fuel cell.

According to aspects of the present invention, the control device includes a temperature sensor sensing the temperature of the fuel cell; an output sensor sensing current and voltage output from the fuel cell; a comparison operating unit judging whether the first point is positioned below the reference current-voltage curve corresponding to the pre-sensed temperature and judging whether the second point is approximate or distant to or from the reference current-voltage curve from the first point; and a control signal generator generating a first control signal for increasing the supply amount of the fuel by a predetermined amount and a second control signal for controlling at least one of the supply amount of the fuel and the supply amount of the water, in response to the output of the comparison operating unit.

Preferably, the fuel cell system further includes a first flow control device to control the supply amount of the fuel and a second flow control device to control the supply amount of the water, in response to the first and second control signals.

Further, the control device includes a memory storing a plurality of reference current-voltage curves corresponding to a plurality of temperatures; and a processor accessing the memory to perform a control operation. The processor increases the supply amount of the fuel by a predetermined amount when the second point is approximate to the reference current-voltage curve and increases the supply amount of the water by a predetermined amount when the second point is distant from the reference current-voltage curve. On the one hand, the processor decreases the supply amount of the water by a predetermined amount when the second point is approximate to the reference current-voltage curve and decreases the supply amount of the fuel by a predetermined amount when the second point is distant from the reference current-voltage curve. On the other hand, the processor increases the supply amount of the fuel by a predetermined amount and decreases the supply amount of the water by a predetermined amount when the second point is approximate to the reference current-voltage curve and decreases the supply amount of the fuel by a predetermined amount and increases the supply amount of the water by a predetermined amount when the second point is distant from the reference current-voltage curve.
The fuel cell system may further include a mixer connected to the fuel supplier and the fuel cell and storing the fuel mixture.
Preferably, the mixer includes a level measurement device to measure the level of the fuel mixture.
Further, the fuel cell system may include a recycler to supply steam and water discharged as by-products due to an electrochemical reaction in the fuel cell.
Preferably, the recycler is controlled by the control device and includes a first flow control device to control the condensation amount of the steam.
Also, the fuel cell system may further include a second flow control device controlled by the control device to control the supply amount of the fuel as well as a fuel circulation device to transfer non-reactive fuel discharged from the fuel cell to the mixer.
Preferably, the fuel cell system further includes a water supplier to supply the water to the mixer.
Preferably, a first flow control device to control the supply amount of the fuel and a second flow control device to control the supply amount of the water is provided.
Moreover, the fuel cell system may further include a fuel supplier to supply the fuel mixture to the fuel cell and an oxidizer supplier to supply the oxidizer to the fuel cell, the fuel supplier and the oxidizer supplier being controlled by the control device.
Preferably, the fuel cell system further includes a power divider to supply the output of the fuel cell to loads and in one embodiment an auxiliary power supplier connected to the power divider to supply power to the control device and the loads.

According aspects of the present invention, a control device for a fuel cell system includes a direct methanol fuel cell generating electric energy by electrochemically reacting a fuel mixture of fuel and water with oxidizer and a first and a second flow control device for controlling the supply amount of the fuel and the supply amount of the water, the control device for a fuel cell system including: a memory storing a reference current-voltage curve; and a processor accessing the memory, wherein the processor first increases the supply amount of the fuel by a predetermined amount when a first point that a first current and a first voltage output from the fuel cell indicate is positioned below a reference current-voltage curve and then increases and decreases any one of the supply amount of the fuel and the supply amount of the water in response to a moving direction of a second point that a second current and a second voltage output from the fuel cell indicate.

According to an aspect of the present invention, the memory stores a plurality of reference current-voltage curves corresponding to the plurality of temperatures of the fuel cell and the processor uses a reference current-voltage curve selected in response to the sensed temperature of the fuel cell.

According to an aspect of the present invention, a control method of a fuel cell system includes a fuel cell using a fuel mixture of fuel and water and a fuel supplier supplying the fuel mixture to the fuel cell by a control device connected to the fuel cell and the fuel supplier, the control method including: sensing a first current and a first voltage output from the fuel cell; judging whether a first point that the first current and the first voltage indicate is positioned below a reference current-voltage curve of the fuel cell; when the first point is positioned below the reference current-voltage curve, increasing the supply amount of the fuel by a predetermined amount; and increasing and decreasing any one of fuel and water in the fuel mixture supplied to the fuel cell in response to a moving direction of a second point, from the first point, indicating a second current and a second voltage sensed from the fuel cell.

Also, the increasing and decreasing of any one of fuel and water in the fuel mixture includes: judging whether the second point is approximate or distant to or from the reference current-voltage curve; when the second is approximate to the reference current-voltage curve, increasing the supply amount of the fuel by a predetermined amount and/or decreasing the supply amount of the water by a predetermined amount; when the second point is distant from the reference current-voltage curve, decreasing the supply amount of the fuel by a predetermined amount and/or increasing the supply amount of the water by a predetermined amount; judging whether a third point of a third current and a third voltage sensed from the fuel cell is positioned in a permissible range of the reference current-voltage curve; and when the third point is positioned within the permissible range, changing and storing the supply rate of fuel and water.

Also, the control method further includes sensing the temperature of the fuel cell. In this case, the reference current-voltage curve is selected among the plurality of reference current-voltage curves in response to the pre-sensed temperature of the fuel cell.
According to aspects of the present invention, a fuel cell system without a methanol concentration sensor, includes: a fuel cell to generate electricity by reacting a fuel mixture and an oxidizer; and a control device to determine an output of the fuel cell, to compare the output with a predetermined current-voltage information of the fuel cell, and to adjust the supply of the fuel mixture and/or the oxidizer according to the compared result of the output and the predetermined current-voltage information.Preferably, the fuel comprises a mixture of fuel and water, and the control device increase at least one of the fuel and the water according to the compared result.
In another embodiment, the control device increases the fuel and/or decreases the water.
Alternatively, the control device increases the water and/or decreases the fuel.
Preferably, the fuel cell system is a direct methanol fuel cell.

According to an aspect of the present invention a method of supplying a fuel mixture and an oxidizer to a fuel cell system with a fuel cell without a methanol concentration sensor, includes: determining an output of the fuel cell; comparing the output with a predetermined current-voltage information of the fuel cell; and adjusting the supply of the fuel mixture and/or the oxidizer according to the compared result of the output and the predetermined current-voltage information.

Preferably, the fuel comprises a mixture of fuel and water, and further comprises increasing at least one of the fuel and the water according to the compared result.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the aspects, taken in conjunction with the accompanying drawings of which:
FIG. 1 is a graph showing a current-voltage curve depending on the concentration change of fuel in a typical fuel cell system according to related art;
FIG. 2 is a block diagram showing a fuel cell system according to an aspect of the present invention;
FIG. 3 is a block diagram showing a control device of a fuel cell system according to an aspect of the present invention;
FIG. 4 is a block diagram showing a control device for a fuel cell system according to another aspect of the present invention;
FIGS. 5A to 5C are graphs explaining a method of controlling concentration of fuel implemented with the control device of FIG. 4;
FIG. 6 is a flow chart showing a control method of a fuel cell system according to an aspect of the present invention;
FIGS. 7A and 7B are graphs explaining a control method of controlling concentration of fuel according to the control method of the fuel cell system of FIG. 6;

### DETAILED DESCRIPTION OF THE EMBODIMENTS

Reference will now be made in detail to various aspects of the present invention, examples of which are illustrated in the accompanying drawings, wherein like reference numerals refer to the like elements throughout. The aspects are described below in order to explain the present invention by referring to the figures.

When any portions are connected to other portions in the following description, they may directly be connected to each other as well as they may electrically be connected to each other through other components therebetween.

FIG. 2 is a block diagram showing a fuel cell system according to an aspect of the present invention.
As shown, the fuel cell system 100 can stably and continuously operate the fuel cell system 100 by controlling the concentration of fuel in a fuel mixture to a desired concentration without using a concentration sensor detecting the concentration of fuel in the fuel mixture. To this end, the fuel cell system 100 includes a fuel cell 110, a fuel supplier 120, a mixer 130, a recycler 140, a power divider 150, an auxiliary power supplier 160, and a control device 170.

More specifically, the fuel cell 110 includes an electricity generation unit or a power generation system to generate electric energy by electrochemically reacting one or more fuel with one or more oxidizer. An anode side of the fuel cell 110 is supplied with the fuel and a cathode side thereof is supplied with the oxidizer. The fuel includes hydrogen gas, natural gas, methanol, coal, petroleum, biomass gas, land fill gas, etc., or any combination thereof. Also, the oxidizer includes air or oxygen gas, etc.

Preferably, the fuel cell 110 is a direct methanol fuel cell (DMFC). The direct methanol fuel cell has a structure wherein a plurality of unit fuel cells (not shown) configured of a membrane electrode assembly (MEA) is stacked with a separator therebetween. The membrane electrode assembly has a structure wherein an anode electrode (so called "fuel electrode" or "oxidation electrode") and a cathode electrode (so called "air electrode" or "reduction electrode") are attached to both sides of a polymer electrolytic film. The structure is referred to as stack.

In the foregoing construction of the fuel cell 100, if fuel is supplied to a catalyst layer on the anode side, the fuel is ionized and oxidized as hydrogen ion (proton, H+) and electron (e-) by undergoing an electrochemical reaction in the catalyst layer. The ionized hydrogen ion is moved to a catalyst layer on the cathode side through the polymer electrolytic film from the catalyst layer on the anode side, and the electron is moved to the catalyst layer on the cathode side through an external conducting wire. The hydrogen ion reaching the catalyst layer on the cathode side is electrochemically reduced with oxygen in the air supplied to the catalyst layer on the cathode side. The reaction produces heat of reaction and water, and additionally, electric energy is generated by the movement of electrons. The reaction of the fuel cell 110 can be represented as follows.

[Reaction 1] Anode : CH₃OH + H₂O→ CO₂ + 6H⁺ + 6e⁻ Cathode : 6H⁺ + 3/2 O₂ + 6e⁻ → 3H₂O Total: CH₃OH + 3/2O₂→ 2H₂O + CO₂

The fuel supplied to the anode side of the fuel cell 110 is a fuel mixture of water and fuel. For example, the fuel mixture is fuel containing a constant or a fixed mole concentration of methanol and water at a constant or a fixed ratio. By using a pump 112 installed between the fuel cell 110 and a mixer 130, it is possible to arbitrarily control the supply amount of the fuel mixture. Further, by using an air pump 114 connected to the cathode side of the fuel cell, it is possible to arbitrarily control the supply amount of the air supplied to the fuel cell 110. Accordingly, both the supply of the fuel mixture and the supply of air for the fuel mixture can be varied as desired.

In various aspects, the fuel supplier 120 stores fuel to be supplied to the fuel cell 110. The fuel supplier 120 includes a fuel storing vessel (not shown) such as a fuel tank or a fuel storing vessel (not shown) in a cartridge fashion. Such fuel storing vessels can be replaced easily. The fuel stored in the fuel supplier 120 includes a fuel mixture in which fuel, water, etc. is mixed or a pure fuel in which the fuel is not mixed with water or others. In case of the fuel mixture, the fuel stored in the fuel supplier 120 is a fuel mixture having mole concentration of fuel higher than that of the fuel mixture supplied to the fuel cell 110. Such may be pure fuel. By using a pump 122 installed between the fuel supplier 120 and the mixer 130, it is possible to arbitrarily control the supply amount of the fuel supplied to the mixer 130 from the fuel supplier 120.

As shown, the mixer 130 mixes and stores fuel and water supplied from the fuel supplier 120 and/or a recycler 140, etc. The fuel supplied to the mixer 130 is discharged from the fuel cell 110 and includes non-reactive or non-reacted fuel supplied to the mixer 130 through a fuel circulation device. The fuel circulation device includes a pipe 116 that connects the fuel cell 110 to the mixer 130. Also, the water supplied to the mixer 130 may be that discharged from the fuel cell 110 and may include steam or water supplied to the mixer 130 through the recycler 140. For example, if about a third of the water generated from the cathode side of the fuel cell 110 is retrieved and supplied to the anode side of the fuel cell 110, it is not required to mix fuel with additional water.

Also, when using the mixer 130, it is possible to generate power for a longer time using the same volume of fuel when using a concentrated fuel than when using a diluted fuel. For example, in case of a direct methanol fuel cell of 12W requiring a pure methanol fuel of about 0.124372ml/min, a fuel mixture of 10 moles is required at a rate of about 0.310929ml/min and a fuel mixture of 1 mole is required at a rate of about 3.109292ml/min. As such, if volume of fuel is the same, it is advantageous to use a higher concentration of fuel for an extended operation. Also, if time to generate power is equal, it is possible to make the size of the fuel supplier (a fuel tank) small by using a higher concentration of fuel for the fuel mixture.

As shown, the recycler 140 forcibly condenses a predetermined amount of steam discharged through the pipe 118 connected to the cathode side of the fuel cell 110. For example, the recycler 140 can be configured of a metal pipe capable of depriving (dissipating) heat of the steam and a fan to forcibly air cool the metal pipe. Of course, the recycler 140 can be configured of various heat exchangers or condensers. Accordingly, when using the recycler 140 installed between the fuel cell 110 and the mixer 130, it is possible to arbitrarily control the amount of the water supplied to the mixer 130.

As shown, the power divider 150 transfers an output of the fuel cell 110 to loads. The power divider 150 also transforms the output of the fuel cell 110 into the type of power required by the loads, if needed. For example, the power divider 150 may include a DC-DC converter and a DC-AC converter, etc., or any combination thereof.

Also, as shown, the power divider 150 transfers an output of an auxiliary power supplier 160 to loads. The power divider 150 may supply the combination of the output of the fuel cell 110 and the output of the auxiliary power supplier 160 to the loads, or selectively supply any one of the output of the fuel cell 110 and the output of the auxiliary power supplier 160 to the loads. Also, the power divider 150 may supply surplus power to the auxiliary power supplier 160 while supplying the output of the fuel cell 110 to the loads. In this case, the auxiliary power supplier 160 may be a charge storage device.

Further, the power divider 150 may decrease the output of the fuel cell 110 by a predetermined amount during a process, such as a power transformation process, etc. Therefore, it is preferable to use a highly efficient power divider 150.

As shown, the auxiliary power supplier 160 supplies a required power to a control device 170, the loads, etc. For example, the auxiliary power supplier 160 supplies power to the control device 170 and the peripherals (or components) of the fuel cell 110 through the power divider 150 when the fuel cell 110 is first started before the fuel cell 110 is fully operational. The auxiliary power supplier 160 used may be a battery, a capacitor, a supercapacitor, etc., or any combination thereof.

If a battery, the types of battery usable as the auxiliary power suppliers 160 include a secondary battery, which is charged with electric energy output from the fuel cell 110 or any other source and which discharges the charged electric energy. As a secondary battery, usable types of the auxiliary power suppliers 160 may be a nickel-hydrogen (Ni-MH) secondary battery, a lithium secondary battery, etc. As the lithium secondary battery, usable types of the auxiliary power suppliers 160 may be a lithium ion secondary battery, a lithium ion polymer secondary battery, and a lithium polymer secondary battery.

As shown, the control device 170 controls the pump 112 connected to the anode side of the fuel cell 110 to supply a sufficient amount of the fuel mixture and the oxidizer to the fuel cell 110 having a stack structure. The control device 170 also controls the oxidizer supplier, for example, the air pump 114 connected to the cathode side of the fuel cell 110. The control device 170 generates the respective necessary control signals CS1, CS2 and applies them to the pump 112 and the air pump 114. The pump 112 or the air pump 114 are examples of flow control devices capable of controlling flow of the fuel mixture and/or air through the respective pumps 112 and 114.

Also, the control device 170 includes a memory with a predetermined capacity. The control device 170 detects current and voltage output during an operation state close to a high load of the fuel cell 110, yields a reference concentration of fuel using the detected current and voltage, and stores the yielded reference concentration of fuel and information establishing a reference current-voltage curve at that time. The reference concentration of fuel and the reference current-voltage curve stored in the memory includes a plurality of information corresponding to a plurality of temperatures suitable for the fuel cell, and those indicating other output characteristics depending on the temperature.

Further, the control device 170 senses the temperature of the fuel cell 110. The temperature of the fuel cell 110 is used as information to confirm a normal operation of the fuel cell at a beginning or to maintain optimum efficiency of operation during normal operations. To this end, the fuel cell 110 is provided with a temperature detector (not shown), such as a thermistor, etc. Accordingly, the control device 170 receives a detection signal DS 1 detected from the temperature detector.

Also, the control device 170 senses current and voltage output from the fuel cell 110. When detecting the current and voltage output from the fuel cell 110, the control device 170 knows or detects whether the concentration of the fuel mixture supplied to the fuel cell 110 is approximate or close to the reference concentration measured during optimum efficiency. For example, the control device 170 senses the current and voltage output from the fuel cell 110 through the power divider 150. Accordingly, the control device 170 receives a detection signal DS2 from the power divider 150 for the current and voltage detected in the output terminal of the fuel cell 110.

Further, the control device 170 generates a control signal CS3 to control the supply amount of the fuel supplied to the mixer 130 from the fuel supplier 120 and applies the generated control signal CS3 to the pump 122. Also, the control device 170 generates a control signal CS4 to control condensation rates of steam discharged from the cathode side of the fuel cell 110 and applies the generated control signal CS4 to the fan (not shown) of the recycler 140, for example. Meanwhile, the control device 170 receives a detection signal DS3 for the level (or amount) of the fuel mixture from a level measurement device or a level sensor (not shown) installed in the mixer 130, and the control device 170 controls the supply amount of the fuel and/or the supply amount of the water depending on the detection signal DS3.

In aspects of the present invention, the control device 170 senses the current and voltage output from the fuel cell 110 and judges whether a point (a point on a power curve or a current-voltage curve) of the sensed current and voltage is outside of a permissible range of the pre-stored reference current-voltage curve. If the detected current and voltage output is on the outside, the control device 170 increases and/or decreases a predetermined amount of fuel to control the supply amount of the fuel or increases and/or decreases a predetermined amount of water to control the supply amount of the water, in response to the change (a moving direction or a relative movement) of the point representing the output current and voltage of the fuel cell 110. Accordingly, the concentration of the fuel mixture is rapidly and accurately optimized. The control device 170 and a control method of the control device 170 will be described in greater detail in the following description.

According to aspects of the present invention, it is possible to rapidly and accurately control the optimum concentration of fuel suitable for the fuel cell without using a methanol concentration sensor. That is, even when the concentration of the fuel mixture supplied to the fuel cell is changed, as is the case when the amount of circulated water is changed or when fuels having different mole concentration are used, it is possible to adjust or optimize the concentration of the fuel mixture supplied to the fuel cell simply and accurately without the methanol concentration sensor. Therefore, it is possible to stably operate the fuel cell system for a length of time without using the methanol concentration sensor. Also, it is possible for the fuel cell system with the methanol concentration sensor to continuously and stably operate the fuel cell system, even after the methanol concentration sensor fails.

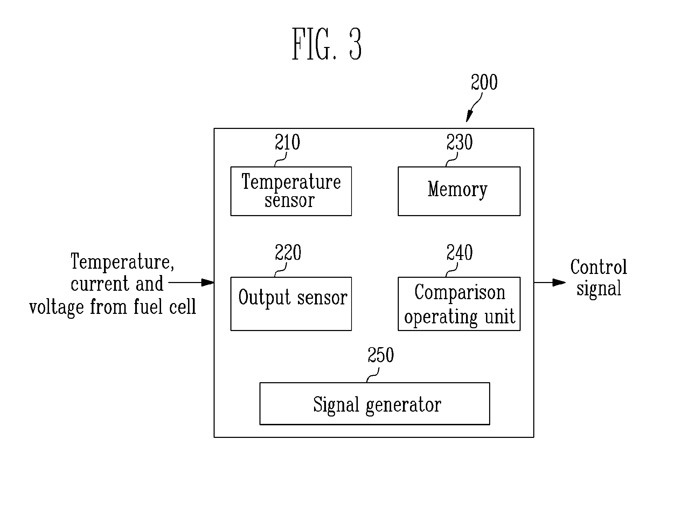

FIG. 3 is a block diagram showing a control device of a fuel cell system according to an aspect of the present invention. A control device 200 of FIG. 3 corresponds to the control device 170.

The control device 200 of FIG. 3 senses the temperature, current and voltage of a fuel cell and controls the supply amount of the fuel and/or the supply amount of the water to allow a point indicating a sensed voltage and current to become approximate to (close to or within a range of) a reference current-voltage curve so as to operate the fuel cell at optimum efficiency.

The control device 200 includes a temperature sensor 210 to sense the temperature of the fuel cell; an output sensor 220 to sense current and voltage output of the fuel cell; a memory 230 to store a reference current-voltage curve of the fuel cell; a comparison operating unit 240 to judge whether a point indicating the sensed current and voltage is outside a permissible range of the reference current -voltage curve or is approximate to (close to or within a range of) the reference current-voltage curve; and a control signal generator 250 to generate a control signal to control concentration of fuel in accordance with the judgment based on the sensed current and voltage.

According to aspects of the present invention, the control device 200 can arbitrarily control the mole concentration of the fuel mixture by controlling a pump (not shown), which is capable of controlling the supply amount of the fuel in response to the sensed current and voltage. The control device 200 can also arbitrarily control a fan or a pump (not shown), which is capable of controlling the supply amount of the water. The control device 200 can be configured of a microprocessor and a memory. While not required in all aspects, the functions of the control device 200 can be implemented as software and/or firmware for use with one or more processors and/or computers. Moreover the control device 200 and/or a computer readable medium maybe encoded with computer and/or processor-executable instructions to perform the functions.

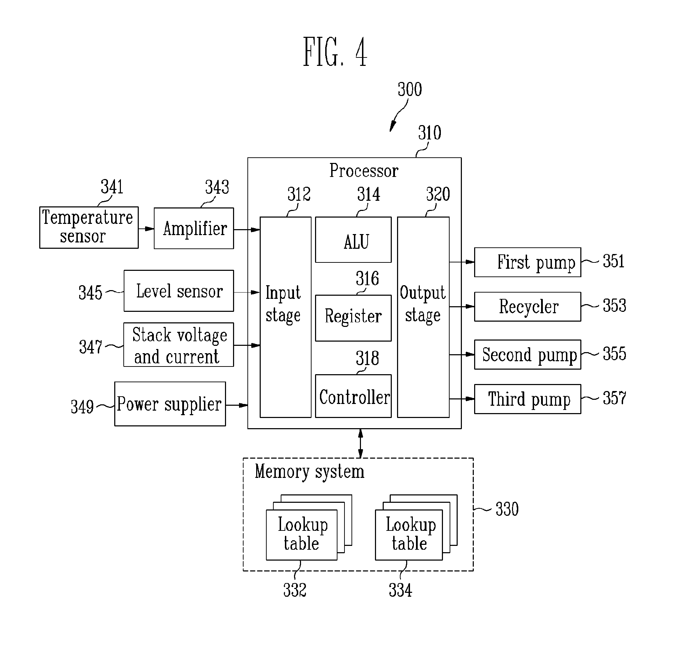

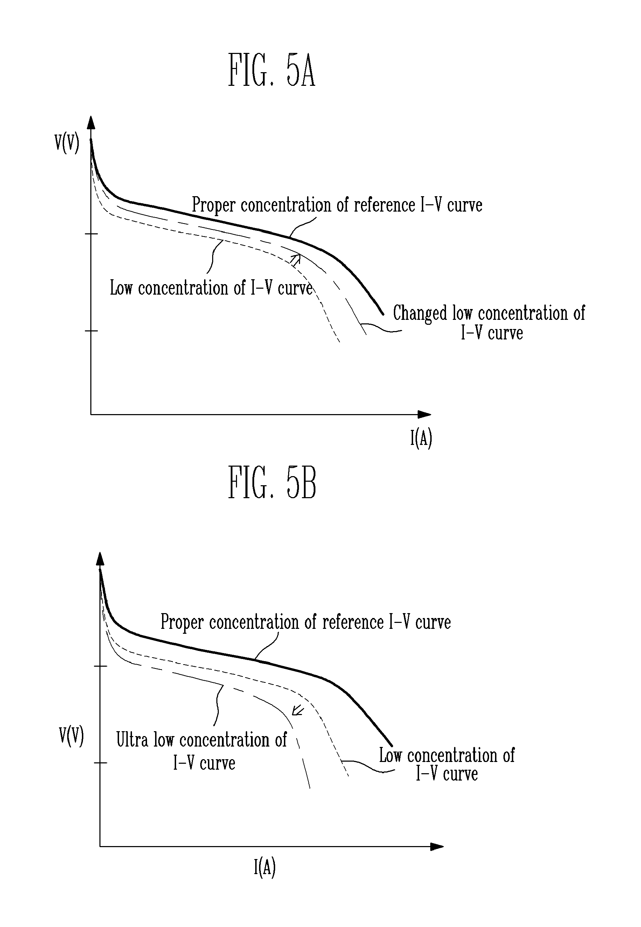

FIG. 4 is a block diagram showing a control device for a fuel cell system according to another aspect of the present invention.
Referring to FIG. 4, the control device 300 according to an aspect of the present invention is configured of a microprocessor (processor) 310 capable of processing a signal in real time and a memory system 330 connected to the microprocessor and storing a program.

The processor 310 includes an arithmetic logic unit (ALU) (314) to perform calculation, a register 316 to temporarily store data and instruction words, and a controller 318 to control the operation of a fuel cell system. The processor 310 includes at least one of processors having a variety of architectures such as Alpha from Digital Co.; MIPS from MIPS technology, NEC, IDT, Siemens, etc.; Cyrix from Intel Co.; x86 from companies including AMD and Nexgen; and Power PC from IBM and Motorola. One or more of the above are trademarks of the respective companies or trademark holders.

The memory system 330 includes a device to store data. Such devices include a high speed main memory in the form of a storing medium such as a random access memory (RAM) and a read only memory (ROM), an auxiliary memory in the form of a long term storing medium such as a floppy disk, a hard disk, a magnetic tape, a CD-ROM, and a flash memory, etc., and electrical, magnetic, optical or other storing mediums. The main memory may include a video memory displaying an image through a display device. Also, the memory system 330 includes an element manufactured to perform a predetermined routine, for example, a flip-flop or a latch.

The memory system 330 stores lookup tables 332, 334 that include a reference current-voltage curve. Preferably, the lookup tables 332, 334 include a plurality of reference current-voltage curves with respect to a temperature change of a fuel cell stack (not shown). The reference current-voltage curve is referred to as a current-voltage curve prepared based on the current and voltage output from the relevant fuel cell stack, which indicate optimum efficiency at a specific temperature of the fuel cell stack.

As shown, the processor 310 receives power from a fuel cell (not shown) having a stack structure. An auxiliary power supplier or a power supplier 349 such as a commercial power source, etc., senses the current and voltage output 347 from the fuel cell stack, and receives a detection signal for the temperature of the fuel cell stack from a temperature sensor 341. At this time, the temperature detection signal is input to the processor 310 through an amplifier 343. Also, the processor 310 receives the detection signal for the level (amount) of the fuel mixture from a level sensor 345 installed in the mixer (not shown). The signal input to the processor 310 is recognized by the processor 310 through an input stage 312 configured of an analog-to-digital converter of predetermined bits.

Subsequently, the processor 310 uses the memory system 330 implemented to perform a program or a predetermined routine to first increase a supply amount of the fuel by a predetermined amount when a first point representing a first current and a first voltage output from the fuel cell is positioned below a reference current-voltage curve. Thereafter, the processor 310 controls any one of the supply amount of the fuel and the supply amount of the water by controlling a first pump 351 and/or a fan in a recycler 353 in response to a movement of a second point (a movement of the second point relative to the first point and/or the reference current-voltage curve) of a second current and a second voltage output from the fuel cell.

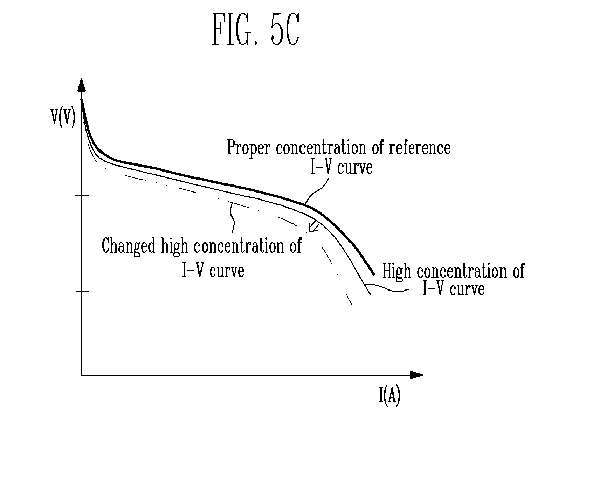

More specifically, as shown in FIG. 5A, if a predetermined amount of fuel is injected when the first point (starting point) is positioned below the reference current-voltage curve, , and the second point is moved towards the reference current-voltage curve due to the change of the concentration of the fuel mixture to a lower concentration than a proper (reference or optimum) concentration, the control device 300 senses the movement direction of the second point towards the reference current-voltage curve and confirms that the fuel mixture is of a low concentration, and further supplies a predetermined amount of fuel while continuously monitoring the current and voltage output from the fuel cell to control the system to conform the current and voltage output from the fuel cell to the reference current-voltage curve as much as possible.

On the one hand, as shown in FIG. 5B, if water is further supplied instead of fuel so that the concentration of the fuel mixture is changed to a lower concentration than that of a proper (reference or optimum) concentration, a fuel shortage occurs to abruptly deteriorate the output of the fuel cell. In the worst case, the operation of the fuel cell may be stopped.

On the other hand, as shown in FIG. 5C, if a predetermined amount of fuel is injected when the first point is positioned below the reference current-voltage curve, and the second point moves away from the reference current-voltage curve due to the change of the concentration of the fuel mixture to a higher concentration than that of a proper (reference or optimum) concentration, the control device 300 senses the movement direction of the second point away from the reference current-voltage curve, and confirms that the fuel mixture is of a high concentration, and further supplies a predetermined amount of water while continuously monitoring the current and voltage output from the fuel cell to control the system to conform the point that the current and voltage output from the fuel cell to the reference current-voltage curve as much as possible.

According to the foregoing, one of the methods to allow the processor 310 to control any one of the supply amount of the fuel and the supply amount of the water is to perform a series of processes to continue to increase the supply amount of the fuel by a predetermined amount if the second point become more proximate to the reference current-voltage curve after increasing the supply amount of the fuel by a predetermined amount, or alternatively, increase the supply amount of the water by a predetermined amount if the second point becomes more distant from the reference current-voltage curve after increasing the supply amount of the fuel by a predetermined amount. Another method is to perform a series of processes to continue to decrease the supply amount of the water by a predetermined amount if the second point becomes proximate to the reference current-voltage curve after increasing the supply amount of the fuel by a predetermined amount, or alternatively, decrease the supply amount of the fuel by a predetermined amount if the second point becomes distant from the reference current-voltage curve after increasing the supply amount of the fuel by the predetermined amount.

Another method is to perform a series of processes to continue decreasing the supply amount of the water by a predetermined amount while simultaneously increasing the supply amount of the fuel by a predetermined amount if the second point becomes proximate to the reference current-voltage curve after increasing the supply amount of the fuel by a predetermined amount, or alternatively, increase the supply amount of the water by a predetermined amount simultaneously with decreasing the supply amount of the fuel by a predetermined amount if the second point becomes distant from the reference current-voltage curve after increasing the supply amount of the fuel by the predetermined amount.

As shown in FIG. 4, the first pump 351 corresponds to, for example, a pump 351 supplying fuel to the mixer. The processor 310 controls the second and third pumps 355, 357 corresponding to a pump supplying a fuel mixture to the fuel cell and an air pump supplying air thereto.

As shown, the control device according to aspects of the present invention conveniently controls the concentration of the fuel mixture supplied to the fuel cell stack to have optimum efficiency to produce the optimal current and voltage from the fuel cell stack, without using the fuel concentration sensor detecting the concentration of fuel, such as the methanol concentration sensor.

In other words, in the conventional direct methanol fuel cell, when the output of the fuel cell system is lower than a proper (reference or optimum) output, the mole concentration in the fuel mixture will be changed using a methanol concentration sensor. However, if the methanol concentration sensor is absent or fails, the fuel control system cannot appreciate or detect the change of the mole concentration in the fuel mixture, making it impossible to stably operate the fuel cell system over a long time. However, according to aspects of the present invention, when an output current and/or voltage of a direct methanol fuel cell is lower than a proper (reference or optimum) output, the concentration of the fuel mixture can simply and accurately be controlled to the proper concentration by further supplying or withholding a predetermined amount of fuel, water, air, or any combination thereof, and accurately judge the concentration change of the fuel mixture in response to the output change of the fuel cell. Therefore, according to aspects of the present invention, it is possible to stably operate the direct methanol fuel cell for a length of time without using the fuel concentration sensor.

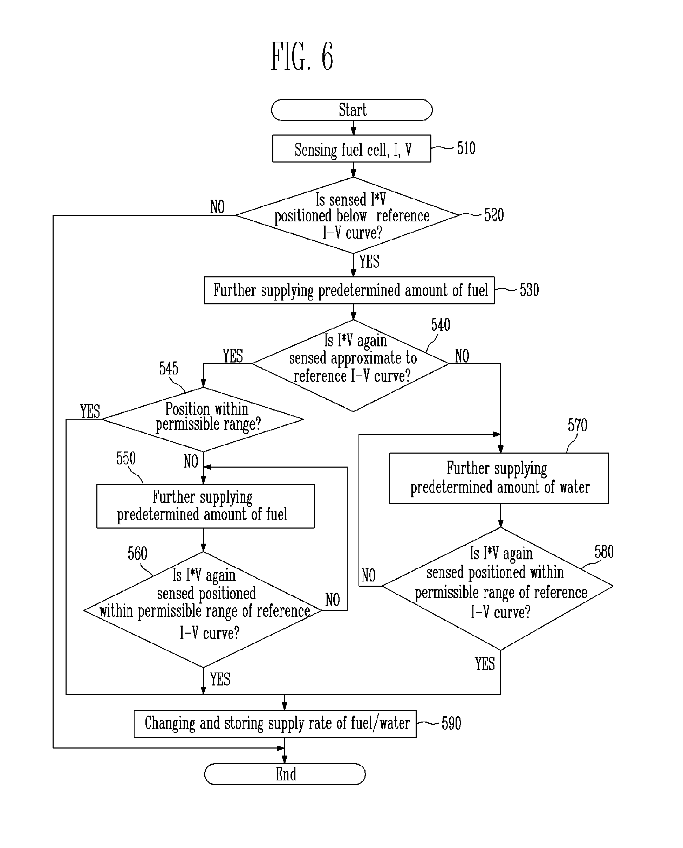

FIG. 6 is a flow chart showing a control method of a fuel cell system according to an aspect of the present invention.
Referring to FIG. 6, the control device of the fuel cell system first senses a current I and a voltage V output from the direct methanol fuel cell (operation 510).

Next, it is judged whether the sensed current and voltage is positioned below a reference current-voltage (I-V) curve (operation 520). In other words, it is judged whether a point (or a power point) of the sensed current and voltage is positioned below the reference current-voltage curve. In referring to the reference current-voltage curve, since the reference current-voltage curve is established to be values near or at the maximum output values of the fuel cell, points of sensed current and voltage representing positions above the reference current-voltage curve are not considered.

One of the judging methods (operation 520) in sensing the current and voltage is to detect the sensed voltage corresponding to the sensed current that is substantially the same as the reference current in the reference current-voltage curve and to compare it with the reference voltage, and at the same time, detects the sensed current corresponding to the reference voltage that is substantially the same as the reference voltage in the reference current-voltage curve and to compare it with the reference current. With the comparison result, if the sensed current and voltage is smaller than the compared reference current and voltage, it can be appreciated (determined) that the sensed current and voltage is positioned below the reference current-voltage curve.

The substantially same reference current and the substantially same reference voltage of the above mean that the reference current and the reference voltage are different within permissible range. For example, when the sensed current and voltage are 232mA and 4.25V, and if the reference current is 235mA and the permissible range is 235mA to 230mA, in the same reference voltage as the sensed voltage, the control device judges that the sensed current of 232 mA is within the permissible range of the reference current. Also, it is understood that the above process is applicable to the sensed voltage in a similar manner to the sensed current.

Next, the control device further supplies a predetermined amount of fuel initially (operation 530). The predetermined amount of fuel is established by experimentation to be a minimum amount of fuel which can change the output of the fuel cell. For example, when a fuel mixture having methanol concentration of 1 mole is supplied to the direct methanol fuel cell of 12W output, the predetermined amount of fuel that would cause a change in the output of the fuel cell may be the supply amount of pure methanol per minute supplied to a mixing tank having a predetermined range of more than 0% to 10% or less, for example. If the output of the fuel cell is not changed even after further supplying the predetermined amount of fuel, the further supply of the predetermined amount of fuel can be repeated two or three times.

Next, the control device judges whether another point of the current and voltage of the fuel cell is moved approximate (more proximate or closer) to the reference current-voltage curve (operation 540). This is shown in FIG. 7A, wherein the control device judges whether point A with the current and voltage (measured I, V) measured relative to the reference current-voltage curve D having a predetermined permissible range Z is moved approximate (more proximate or closer) to the reference current-voltage curve D like the first movement point B, or whether point A is moved away from the reference current-voltage curve D like the second movement point C. One of the judging methods is, for example, to judge whether the difference of the sensed current and the reference current decreases under the same voltage and the difference of the sensed voltage and judge whether the reference voltage decreases under the same current. If the difference decreases, then the addition or withholding of the fuel, water, air, or any combination thereof, optimizes the output of the fuel cell.

According to the judgment result of operation 540, the control device determines whether the concentration of the fuel mixture supplied to the fuel cell is higher or lower than a proper (reference or optimum) concentration in response to a movement of the point A that corresponds to the measured current and voltage. That is, if supplying of a predetermined amount of fuel after the output of the fuel cell moves the point A to the point B (that is, closer to the reference current-voltage curve), the control device judges that the concentration of the fuel mixture is a low concentration of fuel which requires adding of fuel or an increased concentration of fuel. On the other hand, if the supplying of a predetermined amount of fuel moves the point A to the point C (that is, away from the reference current-voltage curve), the control device judges that the concentration of the fuel mixture is a high concentration of fuel which requires withholding of the fuel or a decreased concentration of fuel.

According to the judgment result of operation 540, if the sensed current and voltage are approximate or close to the reference current-voltage curve, the control device judges whether the sensed current and voltage is positioned within the permissible range of the reference current-voltage curve.

According to the judgment result of operation 545, if the point of the sensed current and voltage is not within the permissible range, the control device further supplies a predetermined amount of fuel to raise the concentration of the fuel mixture up to a proper concentration (operation 550). Of course, to increase the concentration of the fuel in the fuel mixture, it is possible to decrease the supply amount of the water by a predetermined amount, or decrease the supply amount of the water by a predetermined amount while also increasing the supply amount of the fuel by a predetermined amount, in the operation. Next, the control device senses the current and voltage of the fuel cell again and judges whether the point of the sensed current and voltage is positioned within the permissible range of the reference current-voltage curve (operation 560). According to the judgment result of operation 560, the point of the sensed current and voltage is within the permissible range of the reference current-voltage curve, the control device changes and stores the supply rate of the fuel and water currently supplied to the fuel cell (operation 590). Then, the control process ends. Meanwhile, according to the judgment result of operation 545, if the point of the sensed current and voltage of the fuel cell after supplying a predetermined amount of fuel is positioned within the permissible range, the control device changes and stores the supply rate of the fuel and water currently supplied to the fuel cell (operation 590). Then, the control process ends.

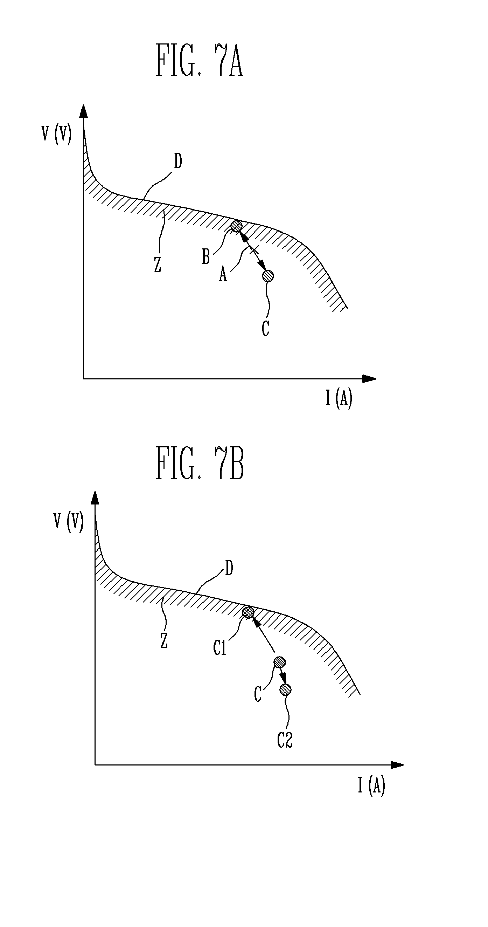

If the point C of the output of the fuel cell is not moved to the first point C1 but to the second point C2 in spite of performing operation 550, as shown in FIG. 7B, whereby if a normal control cannot be performed, the control device issues an alarm and if needed, stops the operation of the fuel cell.

On the one hand, according to the judgment result of operation 540, if the point of the sensed current and voltage is not approximate or close to the reference current-voltage curve, the control device further supplies a predetermined amount of water to lower the concentration of the fuel mixture up to a proper (reference or optimum) concentration (operation 570). Of course, it is possible to decrease the supply amount of the fuel by a predetermined amount or decrease the supply amount of the fuel by a predetermined amount while increasing the supply amount of the water by a predetermined amount, in the operation. Next, the control device senses the current and voltage of the fuel cell again and judges whether the sensed current and voltage are positioned within the permissible range of the reference current-voltage curve (operation 580). According to the judgment result of operation 580, the point of the sensed current and voltage are within the permissible range of the reference current-voltage curve, the control device changes and stores the supply rate of the fuel and water currently supplied to the fuel cell (operation 590). Then, the control process ends.

If the point C of the output of the fuel cell is not moved to the first point C1 but to the second point C2 in spite of performing operation 570, as shown in FIG. 7B, whereby, if a normal control cannot be performed, the control device issues an alarm and if needed, stops the operation of the fuel cell.

In various aspects, the reference current-voltage curve can be established when manufacturing the fuel cell or during use of the fuel cell. According to aspects of the method establishing the reference current-voltage curve during use of the fuel cell, it is possible to measure the current and voltage output from the fuel cell that is approximate or close to an optimum efficiency by measuring the current and voltage output from the fuel cell when separating a battery immediately after a high load operation of the combined fuel cell and battery. As such, aspects of the present invention change and establish the current and voltage measured according to the foregoing method relative to the reference current and voltage so that the method can easily be adapted to changes occurring due to an operation of the fuel cell over a long time.

Meanwhile, the present invention is not limited to the foregoing aspects. For example, the fuel and water can be mixed after each is supplied to the direct methanol fuel cell. In this case, the fuel cell has a structure capable of properly mixing fuel and water. Accordingly, in such an aspect, the mixer can be omitted. Also, a fuel supplier may include a fuel transfer pipe supplying fuel from a fuel repository at a remote location relative to a plurality of fuel cells and a check valve, etc., Further, water may be supplied to a mixer through a separate water supplier and/or a pump, etc., or be directly supplied to the fuel cell. Also, if a fuel supplier itself has a predetermined pressure to supply fuel, the pump for the fuel described above can be replaced with a valve and valve control device, a fan, etc. Also, the fuel cell 110 is further provided with peripherals, such as a heat exchanger, a humidifier, and a cooler, etc.

Aspects of the present invention can stably and continuously operate the system by controlling concentration of fuel supplied to a direct methanol fuel cell without using a methanol concentration sensor. Also, aspects of the present invention can stably operate a fuel cell system for a long time by easily controlling concentration of fuel in a direct methanol fuel cell using a methanol concentration sensor even when the methanol concentration sensor fails.

## Claims

1. A control device of a fuel cell system including a methanol fuel cell to generate electric energy by electrochemically reacting a fuel mixture of fuel and water with an oxidizer,
wherein the control device is adapted to first increase the supply amount of the fuel by a predetermined amount when a first point of a first current and a first voltage output from the fuel cell is positioned below a reference current-voltage curve and then to increase and/or to decrease any one of the supply amount of the fuel, the supply amount of the water and the supply amount of the oxidizer in response to a relative movement of a second point of a second current and a second voltage output from the fuel cell.

2. The control device as claimed in claim 1, wherein the control device is adapted in such a manner that merely any one of the supply amount of the fuel and the supply amount of the water is increased and / or decreased in response to a relative movement of a second point of a second current and a second voltage output from the fuel cell.

3. The control device as claimed in one of the claims 1 or 2, wherein the fuel cell system is a direct methanol fuel cell system, and the control device further comprises: a first and a second flow control device to control the supply amount of the fuel and the supply amount of the water,
a memory to store a reference current-voltage curve; and
a processor to access the memory, wherein the processor is adapted to carry out the increase and decrease operations of the control device.

4. The control device as claimed in claim 2, wherein the memory is adapted to store a plurality of reference current-voltage curves corresponding to the plurality of temperatures of the fuel cell and the processor is adapted to use a reference current-voltage curve selected in response to the temperature of the fuel cell.

5. A fuel cell system including:
a fuel cell to generate electric energy by electrochemically reacting a fuel mixture of fuel and water with an oxidizer;
a fuel supplier to supply the fuel to the fuel cell; and
a control device as claimed in one of the claims 1 - 4.

6. The fuel cell system as claimed in claim 5, wherein the control device includes:
a temperature sensor to sense a temperature of the fuel cell;
an output sensor to sense the first and second currents and voltages output from the fuel cell;
a comparison operating unit to judge whether the first point is positioned below the reference current-voltage curve corresponding to the sensed temperature and to judge whether the second point is approximate or distant to or from the reference current-voltage curve relative to the first point; and
a control signal generator to generate a first control signal to increase the supply amount of the fuel by a predetermined amount and a second control signal to control at least one of the supply amount of the fuel and the supply amount of the water, in response to the output of the comparison operating unit.

7. The fuel cell system as claimed in claim 6, further including a first flow control device to control the supply amount of the fuel and a second flow control device to control the supply amount of the water, in response to the first and second control signals.

8. The fuel cell system as claimed in claim 5, wherein the control device includes a memory to store a plurality of reference current-voltage curves corresponding to a plurality of temperatures and a processor to access the memory to perform a control operation.

9. The fuel cell system as claimed in claim 8, wherein the processor increases the supply amount of the fuel by a predetermined amount when the second point is approximate to the reference current-voltage curve and increases the supply amount of the water by a predetermined amount when the second point is distant from the reference current-voltage curve.

10. The fuel cell system as claimed in claim 8, wherein the processor is adapted to decrease the supply amount of the water by a predetermined amount when the second point is approximate to the reference current-voltage curve and to decrease the supply amount of the fuel by a predetermined amount when the second point is distant from the reference current-voltage curve.

11. The fuel cell system as claimed in claim 8, wherein the processor is adapted to increase the supply amount of the fuel by a predetermined amount and to decrease the supply amount of the water by a predetermined amount when the second point is approximate to the reference current-voltage curve and to decrease the supply amount of the fuel by a predetermined amount and to increase the supply amount of the water by a predetermined amount when the second point is distant from the reference current-voltage curve.

12. The fuel cell system as claimed in claim 5, further including a mixer connected to the fuel supplier and the fuel cell and storing the fuel mixture.

13. The fuel cell system as claimed in claim 12, wherein the mixer includes a level measurement device to measure the level of the fuel mixture.

14. The fuel cell system as claimed in claim 12 , further including a recycler to supply steam and water discharged as by-products due to an electrochemical reaction in the fuel cell.

15. The fuel cell system as claimed in claim 14, wherein the recycler is controlled by the control device and includes a first flow control device to control the condensation amount of the steam.

16. The fuel cell system as claimed in claim 15, further including a second flow control device controlled by the control device to control the supply amount of the fuel.

17. The fuel cell system as claimed in claim 14, further including a fuel circulation device to transfer non-reactive fuel discharged from the fuel cell to the mixer.

18. The fuel cell system as claimed in claim 12, further including a water supplier to supply the water to the mixer.

19. The fuel cell system as claimed in claim 18, further including a first flow control device to control the supply amount of the fuel and a second flow control device to control the supply amount of the water.

20. The fuel cell system as claimed in one of the claims 18 or 19, further including a fuel supplier to supply the fuel mixture to the fuel cell and an oxidizer supplier to supply the oxidizer to the fuel cell, the fuel supplier and the oxidizer supplier being controlled by the control device.

21. The fuel cell system as claimed in claim 20, further including a power divider to supply the output of the fuel cell to loads.

22. The fuel cell system as claimed in claim 21, further including an auxiliary power supplier connected to the power divider to supply power to the control device and the loads.

23. A control method of a fuel cell system including a fuel cell using a fuel mixture of fuel and water and using an oxidizer and a fuel supplier to supply the fuel mixture to the fuel cell by a control device connected to the fuel cell and the fuel supplier, the control method including:
sensing a first current and a first voltage output from the fuel cell;
judging whether a first point of the first current and the first voltage indicate is positioned below a reference current-voltage curve of the fuel cell;
when the first point is positioned below the reference current-voltage curve, increasing the supply amount of the fuel by a predetermined amount; and
increasing and/or decreasing any one of fuel and water in the fuel mixture and or the oxidizer supplied to the fuel cell in response to a movement of a second point relative to the first point, of a second current and a second voltage sensed from the fuel cell.

24. The control method of a fuel cell system as claimed in claim 23, wherein merely any one of fuel and water in the fuel mixture supplied to the fuel cell is increased and / or decreased in response to a movement of a second point relative to the first point, of a second current and a second voltage sensed from the fuel cell.

25. The control method of a fuel cell system as claimed in claim 24, wherein the increasing and/or decreasing of any one of fuel and water includes:
judging whether the second point is approximate or distant to or from the reference current-voltage curve;
when the second point is approximate to the reference current-voltage curve, increasing the supply amount of the fuel by a predetermined amount and/or decreasing the supply amount of the water by a predetermined amount;
when the second point is distant from the reference current-voltage curve, decreasing the supply amount of the fuel by a predetermined amount and/or increasing the supply amount of the water by a predetermined amount;
judging whether a third point of a third current and a third voltage sensed from the fuel cell is positioned within a permissible range of the reference current-voltage curve; and
when the third point is positioned within the permissible range, changing and storing the supply rate of fuel and water.

26. The control method of a fuel cell system as claimed in one of the claims 23 - 24, further including sensing the temperature of the fuel cell, the reference current-voltage curve being selected among the plurality of reference current-voltage curves in response to the temperature of the fuel cell.
